# EUROPÄISCHE PATENTSCHRIFT

(11) **EP 2 365 711 B1**
(45) Veröffentlichungstag und Bekanntmachung des Hinweises auf die Patenterteilung: **10.02.2016**
(21) Anmeldenummer: 10002646.7
(22) Anmeldetag: 12.03.2010
(51) Int. Cl.: H04W 36/08

(54) **Drahtlosnetzwerk, insbesondere für Automatisierungs-, Echtzeit- und/oder Industrie-Anwendungen**
Wireless network, in particular for automation, real time and/or industrial applications
Réseau sans fil, notamment pour applications d'automatisation, en temps réel et/ou industrielles

(43) Veröffentlichungstag der Anmeldung: 14.09.2011
(73) Patentinhaber: Siemens Aktiengesellschaft, 80333 München (DE)
(72) Erfinder: Benjamins, Kai, 76185 Karlsruhe (DE); Keller, Stefan, 76133 Karlsruhe (DE); Müller, Jörg, 76351 Linkenheim (DE); Ober, Martin, 91325 Adelsdorf (DE); Wolf, Stephan, 76137 Karlsruhe (DE)

(56) Entgegenhaltungen:
- US-A- 5 987 062
- US-A1- 2006 270 338
- "IEEE Standard for Information technology - Telecommunications and information exchange between systems - Local and metropolitan area networks - Specific requirements Part 11: Wireless LAN Medium Access Control (MAC) and Physical Layer (PHY) specifications Amendment 8: Medium Access Control (MAC) Qua" IEEE STANDARD; [IEEE STANDARD], IEEE, PISCATAWAY, NJ, USA, 1. Januar 2005 (2005-01-01), Seiten _1-189, XP017601998 ISBN: 978-0-7381-4772-7
- "LTE; Evolved Universal Terrestrial Radio Access Network (E-UTRAN); X2 Application Protocol (X2AP) (3GPP TS 36.423 version 9.1.0 Release 9)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. V9.1.0, 1. Februar 2010 (2010-02-01), XP014046024

## Beschreibung

Die vorliegende Erfindung betrifft ein Drahtlosnetzwerk, insbesondere für Automatisierungs-, Echtzeit- und/oder Industrie-Anwendungen, mit mindestens zwei Zugangs-Netzknoten und mindestens einer Funkstation zur Drahtlos-Kommunikation mit mindestens einem der mindestens zwei Zugangs-Netzknoten, wobei jeder der mindestens zwei Zugangs-Netzknoten einen aus einer Menge verfügbarer auswählbarer Datenkanäle ausgewählten Datenkanal zur Drahtlos-Kommunikation mit einer ihm jeweils zugeordneten Funkstation verwendet.

Derartige Drahtlos-Netzwerke sind aus dem Stand der Technik bekannt. So offenbart beispielsweise die US-Veröffentlichungsschrift US 2006/0221993 A1 ein WLAN-Netzwerk mit mehreren als "Access-Points" bezeichneten Zugangs-Netzknoten und einer Vielzahl von Funkstationen im Funkbereich der Access-Points. Aus einer Mehrzahl verfügbarer Frequenzen wählt dabei ein Access-Point eine freie Frequenz aus, auf welcher er mit den in seinem Funkbereich liegenden Funkstationen kommuniziert. Jeder Access-Point sendet dabei in regelmäßigen Zeitabständen an alle seine Funkstationen eine Abfragenachricht, mit welchen die erhaltende Station die Möglichkeit erhält, Daten an den Access-Point zurückzuschicken. Um Interferenzen der verschiedenen Access-Points im Netzwerk zu vermeiden, kommunizieren die verschiedenen Access-Points mit ihren jeweiligen Funkstationen auf verschiedenen WLAN-Kanälen, die verschiedenen Frequenzen zugeordnet sind.

Es wird weiterhin auf das Dokument US 2006/0270338 A1 verwiesen.

Es ist ein Nachteil des Standes der Technik, dass eine Funkstation, welche einen bestmöglichen Access-Point zur Kommunikation sucht, verschiedene Funkfrequenzen nach entsprechenden Signalen bzw. Nachrichten absuchen muss. Dies ist insbesondere bei Echtzeit-Kommunikationsprotokollen von Nachteil, da dieser Suchschritt auf mehreren Frequenzen relativ zeitaufwändig ist und die Funkstation in dieser Zeit keine reguläre Datenkommunikation machen kann und damit möglicherweise im Echtzeitkommunikations-Protokoll vorgesehenen Antwortzeiten nicht eingehalten werden können.

Es ist daher eine Aufgabe, ein Drahtlos-Netzwerk sowie Komponenten für ein Drahtlos-Netzwerk zur Verfügung zu stellen, die ein schnelleres Finden eines geeigneten Zugangs-Netzknoten für eine Funkstation im Drahtlosnetzwerk ermöglicht.

Diese Aufgabe wird beispielsweise gelöst von einem Drahtlos-Netzwerk gemäß dem vorliegenden Patentanspruch 1.

Dadurch, dass neben den verfügbaren auswählbaren Datenkanälen ein sich davon unterscheidender Kontroll-Kommunikationskanal vorgesehen ist, der von allen Zugangs-Netzknoten im Drahtlos-Netzwerk verwendet wird, ist es beispielsweise möglich, Nachrichten bzw. Sendesignale, welche einer Funkstation die Auswahl eines geeigneten Zugangs-Netzknotens ermöglichen, über diesen Kontroll-Kommunikationskanal zu senden. Damit muss eine Funkstation nicht mehr verschiedene Kanäle, in in einem WLAN-Netzwerk beispielsweise verschiedene Funkfrequenzen entsprechen, durchprüfen, sondern es genügt, wenn sie zur Auswahl eines geeigneten Zugangs-Netzknotens den einen Kontroll-Kommunikationskanal abhört. Auf diese Weise kann die Auswahl eines geeigneten Zugangs-Netzknotens für eine Funkstation beschleunigt werden.

Drahtlos-Netzwerke können beispielsweise WLAN-Netzwerke, z. B. gemäß dem Standard IEEE 802.11 oder auch WiMAX-Netzwerke, z. B. gemäß dem Standard IEEE 802.16 oder vergleichbare Netzwerke z.B. auch jeweils gemäß vergleichbaren Standards sein. Weiterhin kann ein Drahtlos-Netzwerk beispielsweise auch ein Drahtlos-Feldbus-System, z, B. gemäß dem Wireless-HART-Standard oder einem vergleichbaren Standard sein. Ein Drahtlos-Netzwerk kann auch als Drahtlos-Kommunikations-Netz gemäß einem GSM, GPRS, UMTS oder einem ähnlichen Kommunikations-Standard ausgebildet sein.

Als Zugangs-Netzknoten wird ein Netzknoten bezeichnet, der den aktiven und/oder vorrangigen Kommunikationspartner einer Funkstation in einem Drahtlos-Netzwerk bildet. Dabei ist jeder Funkstation im Drahtlos-Netzwerk im Allgemeinen ein, insbesondere genau ein, Zugangs-Netzknoten zugeordnet. In Ausnahmefällen können aber auch mehrere Zugangs-Netzknoten einer Funkstation zugeordnet sein (z. B. beim Übergang einer Funkstation von einem zu einem anderen Zugangs-Netzknoten). Über den ihm zugeordneten Zugangs-Netzknoten kann eine Funkstation beispielsweise mit anderen Funkstationen diesem Drahtlos-Netzwerk aber auch mit externen Kommunikationspartnern, die beispielsweise über ein Ethernet mit dem Drahtlos-Netzwerk verbunden sind, kommunizieren.

Solche Zugangs-Netzknoten können beispielsweise so genannte "Access-Points" in einem WLAN-, WiMAX-Netz oder ähnlichen Funknetzen gemäß einem der vorstehend genannten Standards oder einem ähnlichen Standard sein. Weiterhin kann ein solcher Zugangs-Netzknoten auch eine Basis-Station eines Mobilfunknetzes oder eine vergleichbare Einrichtung sein. Ein Zugangs-Netzknoten kann beispielsweise über eine drahtgebundene oder drahtlose Verbindung an ein externes Kommunikationsnetz angeschlossen sein, z.B. über eine weitere drahtgebundene oder drahtlose Schnittstelle. Das Drahtlos-Netzwerk kann aber auch als autarkes Netzwerk, ohne einen Anschluss an ein externes Kommunikationsnetz, ausgestaltet sein.

Ein Zugangs-Netzknoten kann auch temporär festgelegt sein, z.B. bei einem Ad-Hoc-Netz, bei welchem derartige Zuordnungen häufig erst beim Arrangieren des Netzes zugeteilt werden und sich auch wieder ändern können.

Es kann beispielsweise vorgesehen sein, dass ein Zugangs-Netzknoten einen Datenkanal zur Kommunikation mit allen ihm zugeordneten Funkstationen verwendet. Weiterhin kann auch vorgesehen sein, dass ein Zugangs-Netzknoten für verschiedene ihm zugeordnete Funkstationen verschiedene ausgewählte Datenkanäle verwendet.

Ein Datenkanal kann beispielsweise zur Übertragung von Nutzdaten und/oder Kontrolldaten vorgesehen sein. Solche Kontrolldaten können beispielsweise Daten und Parameter für das Kommunikations-Management (z. B. Kanalparameter), eine Authentifizierung, eine Verschlüsselung oder vergleichbares sein. Allgemein wird unter einem Funkkanal, Kommunikationskanal und/oder Datenkanal ein Kommunikationskanal verstanden, der beispielsweise durch eine Funkfrequenz, insbesondere nur durch eine Funkfrequenz, bestimmt ist. Derartige Datenkanäle werden beispielsweise in WLAN-Systemen gemäß einem der vorstehend genannten Standards oder ähnlichen Systemen verwendet. Weiterhin kann ein Funk-Kommunikationskanal auch neben oder statt einer Funkfrequenz über eine bestimmte Zeitabfolge von verwendeten Frequenzen (sogenanntes "Hopping"), über einen bestimmten Zeitschlitz oder eine entsprechende Codierung definiert sein. Ein Drahtlos-Netzwerk kann beispielsweise auch so ausgestaltet sein, dass zumindest temporär einer oder auch beiden Zugangs- Netzknoten keine Funkstation zugeordnet ist.

Der Kontroll-Kommunikationskanal kann ebenfalls wie vorstehend für einen Datenkanal erläutert, definiert sein.

Der Zugangs-Netzknoten kann neben dem Drahtlos-Senden von Informationsnachrichten über den Kontroll-Kommunikationskanal auch zum Empfangen von Nachrichten über den Kontroll-Kommunikationskanal ausgebildet sein. Genauso kann auch die Funkstation neben dem Empfangen des Kontroll-Kommunikationskanals auch zum Drahtlos-Senden von Nachrichten über den Kontroll-Kommunikationskanal ausgebildet sein. Die Zugangs-Netzknoten können aber auch derart ausgestaltet sein, dass sie nur zum Drahtlos-Senden auf dem Kontroll-Kommunikationskanal ausgebildet sind. Genauso kann die Funkstation derart ausgebildet sein, dass sie nur zum Empfang des Kontroll-Kommunikationskanals ausgebildet ist.

Die Informationsnachricht kann beispielsweise als ein Lebenszeichen-Telegramm ausgebildet sein. Sie kann beispielsweise eine Identifikations-Information über den aussendenden Zugangs-Netzknoten, wie beispielsweise eine Netzwerkadresse, eine logische Adresse oder einen Netzknoten-Namen umfassen. Die Informationsnachricht kann beispielsweise als so genannter "Beacon-Frame" gemäß dem Standard IEEE 802.11 oder ähnlich ausgebildet sein.

Die vorstehend genannte Aufgabe wird weiterhin gelöst von einem Zugangs-Netzknoten für ein Drahtlos-Netzwerk gemäß der vorliegenden Beschreibung, wobei der Zugangs-Netzknoten zur Funk-Kommunikation mit einer ihm zugeordneten Funkstation in dem Drahtlos-Netzwerk über einen aus der Menge verfügbarer Datenkanäle ausgewählten Datenkanal, und zum Senden von Informations-Nachrichten über den Kontroll-Kommunikationskanal ausgebildet ist. Dabei kann wiederum vorgesehen sein, dass der Zugangs-Netzknoten mit allen ihm zugeordneten Funkstationen über den ausgewählten Datenkanal kommuniziert oder auch, dass der Zugangs-Netzknoten mit verschiedenen ihm zugeordneten Funkstationen über verschiedene Datenkanäle kommuniziert.

Der Zugangs-Netzknoten, das Drahtlos-Netzwerk, die Funkstation, die Datenkanäle, der Kontroll-Kommunikationskanal sowie die Informationsnachricht können weiterhin gemäß der vorliegenden Beschreibung ausgebildet sein.

Auch ein derartiger Zugangs-Netzknoten bietet den Vorteil, dass es über die getrennten Daten- und Kontroll-Kanäle möglich ist, zur Auswahl eines Zugangs-Netzknotens geeignete Informationsnachrichten auf dem gemeinsamen Kontroll-Kommunikationskanal zu versenden und es somit den Funkstationen zu ermöglichen, über das Mithören nur eines Funkkanals derartige Informationen über alle in Funkreichweite befindlichen Zugangs-Netzknoten zu erhalten. Auf diese Weise können entsprechende Funkstationen bei einem solchen "Scan" auf das Umschalten zwischen verschiedenen Kanälen, beispielsweise verschiedenen Funkfrequenzen, verzichten und so die notwendigen Informationen schneller sammeln.

In einer vorteilhaften Ausgestaltung kann der Zugangs-Netzknoten eine erste Sende/Empfangs-Einheit zur Funk-Kommunikation über den ausgewählten Datenkanal und eine zweite Sende-Einheit zum Drahtlos-Senden der Informationsnachrichten über den Kontroll-Kommunikationskanal umfassen. Die Sende-Einheit zum Senden der Informationsnachrichten über den Kontroll-Kommunikationskanal kann beispielsweise als reine Sende-Einheit oder auch als Sende/Empfangs-Einheit ausgebildet sein.

Solche getrennten Funk-Einheiten bietet den Vorteil, dass die Daten-Kommunikation über den ausgewählten Datenkanal parallel zur Kommunikation über den Kontroll-Kommunikationskanal erfolgen kann. Dadurch findet keine Störung der Daten-Kommunikation durch die Informationsnachrichten des Kontroll-Kommunikationskanals statt, was insbesondere die Koordination der Kommunikation des Zugangs-Netzknotens mit den ihm zugeordneten Funkstationen vereinfacht. Damit werden die Datenkanäle nicht unnötig mit den Informationsnachrichten belastet und es können bei einer relativ geringen Anzahl von Funkstationen auch großflächige Bereiche mit wenigen Kanälen ausgeleuchtet werden. Zudem ist es damit möglich, auch größere Drahtlosnetze zu betreiben, da die Zahl der benutzten Datenkanäle nicht mehr durch das Verschicken der Informationsnachrichten beeinflusst wird.

Weiterhin kann der ersten Sende/Empfangs-Einheit eine erste Antenne zugeordnet sein und der zweiten Sendeeinheit eine zweite Antenne zugeordnet sein, wobei die erste und zweite Antenne eine gleiche oder ähnliche Antennen-Charakteristik aufweisen. Dabei bezieht sich das Wort "gleich" auf ein gleich innerhalb der üblichen Fabrikations-, Mess- und/oder Einstell-Toleranzen. Eine ähnliche Antennencharakteristik liegt vor, wenn die Abweichungen der Antennencharakteristiken so gering sind, dass die nachfolgend beschriebenen Vorteile weiterhin erzielt werden oder erzielbar sind.

Es ist ein Vorteil dieser Ausgestaltung, dass auf diese Weise die Informationsnachrichten über den Kontroll-Kommunikationskanal mit der gleichen Feldstärkeverteilung gesendet werden und ein vergleichbares Funkfeld ausbilden, wie dies mit Daten-Nachrichten über den ausgewählten Datenkanal erfolgt. Auf diese Weise entspricht eine Bewertung einer Qualität eines Zugangs-Netzknotens durch eine Funkstation, beispielsweise durch Auswerten von Informationsnachrichten, später auch der Qualität der empfangenen Datennachrichten. Bei der Auswahl eines vorteilhaften Zugangs-Netzknotens anhand der von ihm gesendeten Informationsnachrichten sind damit die entsprechenden Vorteile dieses Zugangs-Netzknotens auch direkt auf die Kommunikation auf dem zugeordneten Datenkanal übertragbar. Auf diese Wiese lässt sich eine verbesserte Auswahl eines bevorzugten Zugangs-Netzknotens erreichen.

Es kann weiterhin vorgesehen sein, dass die über den Kontroll-Kommunikationskanal gesendeten Informationsnachrichten eine Identitätsinformation über den Zugangsnetzknoten umfassen. Identitätsinformationen können dabei jegliche Art von Informationen sein, anhand welcher ein Empfänger der Informationsnachrichten den aussendenden Zugangs-Netzknoten identifizieren kann. Es kann beispielsweise eine Netzwerkadresse sein, eine symbolische Adresse, ein symbolischer Name oder eine Gerätebezeichnung des jeweiligen Zugangs-Netzknotens. Derartige Informationsnachrichten können weiterhin beispielsweise als so genannten "Beacon-Frames" für ein WLAN-Netz, z. B. gemäß dem Standard IEEE 802.11 oder als vergleichbare Nachrichtenformate ausgestaltet sein.

Auf diese Weise kann ein Empfänger den sendenden Zugangs-Netzknoten identifizieren und beispielsweise aus den Informationsnachrichten entnommene Bewertungskriterien für den aussendenden Zugangs-Netzknoten diesem zuordnen.

Die über den Kontroll-Kommunikationskanal gesendeten Informationsnachrichten können beispielsweise weiterhin mit einer vorgegebenen oder vorgebbaren Sende-Intensität, -Leistung oder -Feldstärke ausgesendet werden. Diese Sende-Intensität, -Leistung oder -Feldstärke kann beispielsweise auch einen Empfänger, beispielsweise einer Funkstation im Drahtlos-Netzwerk mitgeteilt werden. Auf diese Weise ist es einem Empfänger, z. B. einer Funkstation, möglich, anhand der Intensität des empfangenen Signals die Qualität einer Funkverbindung zwischen einem aussendenden Zugangs-Kontrollpunkt und der Funkstation zu ermitteln. Die Bestimmung der Qualität der Funkverbindung kann beispielsweise erfolgen, indem die Empfangs-Intensität mit der ursprünglichen Sende-Intensität verglichen wird.

Es kann beispielsweise vorgesehen sein, dass alle Zugangs-Netzknoten des Drahtlos-Netzwerks eine einheitliche vorgegebene Sende-Intensität für die von Ihnen gesendeten Informationsnachrichten verwenden, so dass eine Funkstation allein durch Vergleich der Empfangs-Intensitäten der entsprechenden Informationsnachrichten die Qualität der Funkübertragung zu den einzelnen Zugangs-Netzknoten, von welchen sie Informationsnachrichten empfangen haben, bewerten kann.

Die Ermittlung der Qualität einer Funkverbindung zwischen einem Zugangs-Netzknoten und einer Funkstation kann auch im Zugangs-Netzknoten oder einem dahinter liegenden Netzwerk-Controller erfolgen, indem beispielsweise die die Informationsnachricht empfangende Funkstation die Empfangs-Intensität dieser Informationsnachricht zurück an den zugeordneten Zugangs-Netzknoten sendet.

Die Informationsnachrichten können beispielsweise weiterhin gemäß einem vorgegebenen oder vorgebbaren Zeitmuster ausgesendet werden. Beispielsweise kann ein Zugangs-Netzknoten in regelmäßigen Zeitabständen z. B. alle 5 ms, alle 10 ms, alle 50 ms oder auch 100 ms, ggf. auch jede Sekunde, eine Informations-Nachricht aussenden. Ein Zeitmuster kann auch derart ausgestaltet sein, dass innerhalb einer vorgegebenen Zeitspanne genau eine Informationsnachricht oder auch mindestens eine Informationsnachricht versendet wird, ohne dabei den genauen Zeitpunkt spezifizieren zu müssen. Weiterhin kann ein Zeitmuster jede geplante, planbare oder variable Abfolge von Sendezeitpunkten für eine Informations-Nachricht sein. Ein entsprechendes Zeitmuster kann beispielsweise auch durch den Empfang einer Nachricht von einer Funkstation, einem anderen Zugangs-Netzknoten, einem Netzwerk-Controller oder einem anderen Kommunikationspartner ausgelöst oder beeinflusst werden.

In einer vorteilhaften Ausgestaltung weist der Zugangs-Netzknoten eine Kommunikations-Steuerungseinheit auf, die zum Versenden von Kommunikations-Abfrage-Nachrichten an eine Auswahl von dem Zugangs-Netzknoten zugeordneten Funkstationen im Drahtlos-Netzwerk, insbesondere über den ausgewählten Datenkanal, derart ausgebildet ist, dass in einem vorgegebenen oder vorgebbaren Zeitraum bzw. gemäß einem vorgegebenen oder vorgebbaren Zeitmuster, jede Funkstation der Auswahl von Funkstationen mindestens eine Kommunikations-Abfrage-Nachricht erhält. Das vorgegebene oder vorgebbare Zeitmuster kann z.B. wie in der vorstehenden Beschreibung dargestellt ausgestaltet und vorgesehen sein

Eine Kommunikations-Abfrage-Nachricht kann beispielsweise eine Nachricht sein, welche die empfangende bzw. die adressierte Funkstation abfragt, ob ein Bedarf zum Senden von Daten von der jeweiligen Funkstation an den Zugangs-Netzknoten besteht. Weiterhin kann die Kommunikations-Abfrage-Nachricht der empfangenden und/oder adressierten Funkstation ein Zeitfenster zum Senden von Daten an den Zugangs-Netzknoten eröffnet.

Die Auswahl von dem Zugangs-Netzknoten zugeordneten Funkstationen können beispielsweise alle dem Zugangs-Netzknoten zugeordneten Funkstationen sein, es können nur Funkstationen sein, die bestimmten Auswahlkriterien genügen, z. B. welche bestimmte technische oder inhaltliche Voraussetzungen erfüllen (z. B. ein bestimmtes Protokoll unterstützen, Echtzeit-Protokolle unterstützen, eine bestimmte Sicherheitsstufe oder Sicherheitsprotokolle aufweisen oder Ähnliches) oder auch nur einzelne ausgewählte oder auch nur eine einzelne Funkstation sein.

Der vorgegebene oder vorgebbare Zeitraum kann eine fest vorgegebene Zeitspanne sein, in welchem eine Funkstation der Auswahl von Funkstationen genau eine oder mindestens eine derartige Kommunikations-Abfrage-Nachricht erhält. Solche Schemata zur Versendung von Kommunikations-Abfrage-Nachrichten können beispielsweise bei Echtzeit-Kommunikationsprotokollen vorgesehen sein, bei welchen eine im Protokoll vorgegebene Antwortzeit auf bestimmte Ereignisse erreicht werden muss. Mit der vorliegenden Ausgestaltung kann dann erreicht werden, dass jede Funkstation auch die Möglichkeit erhält, innerhalb eines vorgegebenen Zeitraumes zu antworten. Derartige vorgegebene oder vorgebbare Zeiträume können beispielsweise 32, 64 oder 128 ms sein.

Allgemein kann bei jeglicher Verwendung derartiger Zeiträume und Zeitmuster vorgesehen sein, dass eine Zeitsynchronisierung zwischen dem oder den Zugangs-Netzknoten und der oder den entsprechenden Funkstationen vorgenommen wird, damit diese eine gleiche oder vergleichbare Zeitbasis haben. Dabei kann beispielsweise ein TSF-Verfahren gemäß dem WLAN-Standard z. B. gemäß IEEE 802.11 verwendet werden.

In einer weiteren vorteilhaften Ausgestaltung der Erfindung kann das vorgegebene oder vorgebbare Zeitmuster zur Versendung der Informations-Nachrichten derart vorgesehen sein, dass im Vergleich zum vorgebbaren oder vorgegebenen Zeitraum zum Versenden der Kommunikations-Abfrage-Nachrichten eine Funkstation zumindest im Mittel pro Zeitraum mehr Informations-Nachrichten als Kommunikations-Abfrage-Nachrichten erhält. Bei einem regelmäßigen Versenden der Informations-Nachrichten und Kommunikations-Abfrage-Nachrichten würde dies bedeuten, dass der Zeitabstand zweier von einem Zugangs-Netzknoten versendeter, aufeinanderfolgender Informations-Nachrichten kürzer als der Zeitabstand von zwei an eine bestimmte Funkstation gesendeten bzw. adressierten Kommunikations-Abfrage-Nachrichten ist.

Auf diese Weise kann erreicht werden, dass mit hoher Wahrscheinlichkeit eine Funkstation zwischen zwei Kommunikations-Abfrage-Nachrichten auch Informations-Nachrichten empfangen kann.

Weiterhin kann die Kommunikations-Steuerungseinheit des Zugangs-Netzknotens derart ausgebildet sein, dass während eines einer zugeordneten Funkstation zugeordneten Blockierungszeitraumes keine Kommunikations-Abfrage-Nachricht an diese Funkstation gesendet wird. Dieser Blockierungszeitraum, bzw. die dafür charakteristischen Daten und/oder eine Trigger-Information dafür, kann beispielsweise von der Funkstation an den Zugangs-Netzknoten übermittelt werden.

Mit dieser Ausgestaltung kann erreicht werden, dass eine Funkstation einen vorgegebenen oder vorgebbaren Zeitraum zur Verfügung hat, indem sie andere Tätigkeiten wie beispielsweise das Abhören des Kontroll-Kommunikationskanals vornehmen kann und dabei nicht die Gefahr besteht, dass sie eine Kommunikations-Abfrage-Nachricht vom zugeordneten Zugangs-Netzknoten versäumt. Insbesondere innerhalb eines Echtzeit-Protokolls könnten beispielsweise beim Versäumen einer oder mehrerer Kommunikations-Abfrage-Nachrichten die Echtzeit-Eigenschaften der Kommunikation beeinträchtigt sein.

Der vorgegebene oder vorgebbare Zeitraum kann ein fest im System vorgegebener Zeitraum oder auch ein extern beeinflussbarer Zeitraum sein. Die Einstellung eines solchen Zeitraums kann beispielsweise über einen Benutzer oder auch einen Netzwerk-Controller erreicht werden. So kann beispielsweise ein Benutzer im Rahmen verschiedener Echtzeit-Protokolle einen solchen Kommunikations-Abfrage-Nachrichten-Rhythmus auswählen.

In einer weiteren vorteilhaften Ausgestaltung der Erfindung kann der Zugangs-Netzknoten eine drahtlose oder drahtgebundene Schnittstelle zu einem weiteren Zugangs-Netzknoten im Drahtlos-Netzwerk aufweisen, wobei der Zugangs-Netzknoten und der weitere Zugangs-Netzknoten derart ausgebildet sind, dass, bei einem Wechsel einer dem Zugangs-Netzknoten zugeordneten Funkstation zum weiteren Zugangs-Netzknoten als ihrem neuen zugeordneten Zugangs-Netzknoten, Daten bezüglich der Funkstation an den weiteren Zugangs-Netzknoten über die drahtlose oder drahtgebundene Schnittstelle übermittelt werden.

Entsprechend kann auch bei einem Wechsel einer dem weiteren Zugangs-Netzknoten zugeordneten Funkstation zum Zugangs-Netzknoten vorgesehen sein, dass die Daten bezüglich der Funkstation an den Zugangs-Netzknoten über die drahtlose oder drahtgebundene Schnittstelle übermittel werden.

Daten bezüglich der Funkstation können beispielsweise der bei einem WLAN-Netzwerk vorgesehene "Kontext" sein. Daten bezüglich der Funkstation können beispielsweise ein Gerätename, Gerätefeatures, Geräteeinstellungen, verfügbare Kanäle, bei der Kommunikation mit dem zugeordneten Zugangs-Netzknoten verwendete Kommunikations-Parameter und/oder Kanalparameter umfassen. Weiterhin können solche Daten bezüglich der Funkstation auch vom letzten zugeordneten Zugangs-Netzknoten noch zu übertragende Daten oder bereits übertragene aber von der Funkstation noch nicht quittierte Daten umfassen.

Die Übertragung vom vorherigen Zugangs-Netzknoten an den weiteren Zugangs-Netzknoten kann beispielsweise auf Initiative des weiteren, neuen Zugangs-Netzknotens für eine Funkstation erfolgen (das heißt z. B. abgeholt bzw. "gepollt" werden) oder auch auf Initiative des ursprünglichen, alten Zugangs-Netzknotens einer Funkstation an den neuen übertragen werden.

Die vorstehend genannte Aufgabe wird auch gelöst von einer Funkstation für ein Drahtlos-Netzwerk gemäß der vorliegenden Beschreibung zur Kommunikation mit einem ihr zugeordneten Zugangs-Netzknoten gemäß der vorliegenden Beschreibung, wobei die Funkstation zur Daten-Kommunikation mit dem ihr zugeordneten Zugangsnetzknoten über den ausgewählten Datenkanal und zum Empfang von Informationsnachrichten über den Kontroll-Kommunikationskanal ausgebildet ist.

Ein Beispiel für eine Zuordnung von einem Zugangs-Netzknoten und einer Funkstation zueinander ist beispielsweise das "Assoziieren" eines "WLAN-Access-Points" (ein Beispiel für einen Zugangs-Netzknoten) mit einem "WLAN-Client" (ein Beispiel für eine Funkstation) in einem WLAN-Netz (Beispiel für ein Drahtlosnetzwerk).

Wie vorstehend ausgeführt, hat eine solche Funkstation beispielsweise den Vorteil, dass das Abfragen von im Umfeld der Funkstation befindlichen Zugangs-Netzknoten vereinfacht wird, da die Zugangsnetzknoten, oder zumindest einige davon, Informationsnachrichten auf einem gemeinsamen Kontroll-Kommunikationskanal senden und so alleine durch Abhören des einen Kontroll-Kommunikationskanals die Funkstation Informationsnachrichten von all diesen Zugangs-Netzknoten empfangen und auswerten kann. Es ist dabei beispielsweise keine Umschaltung zwischen verschiedenen von den einzelnen Zugangs-Netzknoten verwendete Datenkanäle und/oder Funkfrequenzen notwendig. Dadurch wird das Finden einer bevorzugten Zugangs-Netzknoten-Funkstation oder auch das Einleiten eines Übergangs von einem zugeordneten Zugangs-Netzknotens zu einem besser geeigneten Zugangs-Netzknoten (z. B. das so genannte "handover") vereinfacht.

Die Funkstation kann weiterhin zum Senden einer Information über einen Blockierungs-Zeitraum, insbesondere über den ausgewählten Datenkanal, an den ihr zugeordneten Zugangs-Netzknoten ausgebildet sein. Es kann vorgesehen sein, dass die Funkstation während eines solchen Blockierungs-Zeitraums zumindest u. a. eine Abfrage des Kontroll-Kommunikationskanals vornimmt, vornehmen möchte oder plant.

Der Blockierungszeitraum kann in der Funkstation beispielsweise durch einen Anfangs- und einen Endzeitpunkt oder auch einen Anfangszeitpunkt und eine Länge vorgegeben sein. Die Bestimmung des Anfangszeitpunkts kann beispielsweise durch die Funkstation oder mittelbar oder unmittelbar durch ein von extern empfangenes Signal z. B. ein Triggersignal oder eine Nachricht beispielsweise vom Zugangs-Netzknoten bestimmt werden. Beispielsweise kann der Blockierungs-Zeitraum durch den Empfang einer Kommunikations-Abfrage-Nachricht gemäß der vorliegenden Beschreibung vom zugeordneten Zugangs-Netzknoten zumindest mittelbar vorgegeben sein.

Die gesendete Information über den Blockierungszeitraum kann beispielsweise eine Information über den Anfangszeitpunkt und den Endzeitpunkt, eine Information über den Anfangszeitpunkt und die Länge oder ähnliche Bestimmungsparameter für den Blockierungszeitraum umfassen. Weiterhin können dem zugeordneten Zugangs-Netzknoten auch einzelne der Parameter bekannt sein, so dass die Information über den Blockierungszeitraum nur die fehlenden Informationen enthalten muss. Die Information über den Blockierungszeitraum kann auch nur die Information enthalten, dass jetzt ein Blockierungszeitraum gemäß beispielsweise bereits im Zugangs-Netzknoten vorliegenden Informationen geplant bzw. und vorgesehen ist.

Mit dieser Ausgestaltung wird die Abfrage von zur Verfügung stehenden Zugangs-Netzknoten für eine Funkstation vereinfacht, da durch Übermitteln des Blockierungs-Zeitraums an den Zugangs-Netzknoten diesem bekannt ist, wann die Funkstation nicht zum Empfang irgendwelcher Datennachrichten, z.B. einer Kommunikations-Abfrage-Nachricht, bereit ist oder bereit sein könnte. Auf diese Weise kann, beispielsweise in einem Echtzeit-Protokoll, die Funkstation sicher sein, dass während des Blockierungs-Zeitraums keine derartige Kommunikations-Abfrage-Nachricht an sie gesendet wird, und es ihr daher möglich ist, ohne eine solche Nachricht zu verpassen beispielsweise den Kontroll-Kommunikationskanal abzuhören.

Die Funkstation kann weiterhin zum Versenden einer Antwort-Daten-Nachricht über den ausgewählten Datenkanal an den ihr zugeordneten Zugangs-Netzknoten als Antwort auf eine vom zugeordneten Zugangs-Netzknoten erhaltene Kommunikations-Abfrage-Nachricht ausgebildet sein. Es kann beispielsweise vorgesehen sein, dass die Funkstation innerhalb eines vorgegebenen oder vorgebbaren Zeitfensters nach Erhalt einer Kommunikations-Abfrage-Nachricht eine oder mehrere Antwort-Daten-Nachrichten an den Zugangs-Netzknoten versendet oder versenden kann. Das Zeitfenster und/oder der Zeitpunkt des Beginns des Zeitfensters kann beispielsweise innerhalb des Drahtlosnetzwerks vorgegeben sein, vom Zugangs-Netzknoten festgelegt und an die Funkstation übermittelt und/oder in der Funkstation selber festgelegt sein.

Die Antwort-Daten-Nachricht kann jegliche Art von Informationen, Daten oder Parametern enthalten, die die Funkstation zum aktuellen Zeitpunkt an den Zugangs-Netzknoten und gegebenenfalls einen damit mittelbar oder unmittelbar verbundenen Kommunikationspartner versenden möchte. Weiterhin kann vorgesehen sein, dass die Kommunikations-Abfrage-Nachricht eine bestimmte Informations- und/oder Datenkategorie anfordert und die Funkstation dann die entsprechenden Daten beziehungsweise Informationen zurücksendet.

Auf diese Weise kann eine geordnete Kommunikation innerhalb eines Drahtlosnetzwerks, insbesondere innerhalb der einem Zugangs-Netzknoten zugeordneten Funkstationen, erreicht werden, da beispielsweise die Funkstationen dann nicht mehr wahllos senden beziehungsweise den ausgewählten Datenkanal ständig überprüfen müssen, ob sie nun Nachrichten senden können, sondern dass die Funkstationen einfach auf die entsprechende Aufforderung des Zugangs-Netzknotens warten und dieser die Datenkommunikation der einzelnen Funkstationen somit steuert. Auf diese Weise lassen sich beispielsweise einfacher Echtzeit-Protokolle in derartigen Drahtlosnetzwerken realisieren, da über den entsprechenden Abfragerhythmus des Zugangs-Netzknotens die durch das Echtzeitprotokoll einzuhaltenden Zeitlimits besser eingehalten und kontrolliert werden können.

Die Antwort-Daten-Nachricht an den Zugangs-Netzknoten kann beispielsweise auch die vorstehend erläuterte Information über den Blockierungs-Zeitraum umfassen. Auf diese Weise hat eine Funkstation die Möglichkeit, regelmäßig oder auch unregelmäßig dem zugeordneten Zugangs-Netzknoten mitzuteilen, wann es für einen Empfang von beispielsweise Kommunikations-Abfrage-Nachrichten oder anderen Nachrichten nicht empfangsbereit ist, da sie während des Blockierungs-Zeitraums andere Aufgaben erledigt, beispielsweise zumindest unter Anderem den Kontroll-Kommunikationskanal abhört und/oder auswertet.

Die Funkstation kann in einer vorteilhaften Ausgestaltung weiterhin zur Auswertung von über den Kontroll-Kommunikationskanal empfangenen Informations-Nachrichten derart ausgebildet und eingerichtet sein, dass empfangene Informations-Nachrichten den jeweils aussenden Zugangs-Netzknoten zugeordnet werden oder zuordenbar sind. Auf diese Weise ist es der Funkstation möglich, die verschiedenen Informations-Nachrichten und ggf. deren Inhalt oder Auswertung den jeweils aussendenden Zugangs-Netzknoten zuzuordnen. Auf diese Weise können die Informations-Nachrichten, obwohl sie über einen gemeinsamen Kontroll-Kommunikationskanal übermittelt werden, trotzdem zur Zuordnung bestimmter Informationen zu bestimmten Zugangs-Netzknoten verwendet werden.

Insbesondere kann die Funkstation Mittel zum Ermitteln eines bevorzugten Zugangs-Netzknotens unter Verwendung von empfangenen Informations-Nachrichten umfassen. Beispielsweise können diese Mittel Mittel zum Auswerten der Empfangs-Feldstärke oder -Intensität eines einer empfangenen Informations-Nachricht zugeordneten Funksignals umfassen. Weiterhin können auch Eigenschaften wie Rauschen, Jitter, Verzögerungen und/oder beliebige Kombinationen davon bei einem solchen empfangenen Signal durch die Mittel ausgewertet werden oder auswertbar sein. Weiterhin können die Mittel auch Mittel zum Erfassen des Inhalts einer empfangenen Informations-Nachricht umfassen.

Das Ermitteln des bevorzugten Zugangs-Netzknotens kann beispielsweise auf der Grundlage einer besten Empfangs-Feldstärke oder -Intensität eines einer empfangenen Informations-Nachricht zugeordneten Funksignals erfolgen. Weiterhin können auch die vorstehend weiteren Parameter bei der Ermittlung eines bevorzugten Zugangs-Netzknotens berücksichtigt werden. Zudem kann auch ein Inhalt einer empfangenen Informations-Nachricht bei der Auswahl eines bevorzugten Zugangs-Netzknotens berücksichtigt werden, wie beispielsweise die vom Zugangs-Netzknoten unterstützten Protokolle, Sicherheitsstandards und/oder weitere Sicherheitskriterien.

Auf diese Weise können die auf dem gemeinsamen Kontroll-Kommunikationskanal versendeten Informations-Nachrichten einer Funkstation das Ermitteln eines bevorzugten Zugangs-Netzknotens ermöglichen oder zumindest erleichtern. Da die Informations-Nachrichten verschiedener Zugangs-Netzknoten auf demselben Kontroll-Kommunikationskanal übertragen werden, muss dazu die Funkstation nicht zwischen verschiedenen Kanälen, beispielsweise verschiedenen Frequenzen, hin und her springen. Dadurch wird eine solche Auswahl vereinfacht und beschleunigt.

Die Funkstation kann dann weiterhin derart ausgebildet und eingerichtet sein, dass sie einen Wechsel zum bevorzugten Zugangs-Netzknoten veranlasst, wenn der ermittelte bevorzugte Zugangs-Netzknoten nicht dem aktuell zugeordneten Zugangs-Netzknoten entspricht. Weiterhin kann die Funkstation derart ausgebildet und eingerichtet sein, dass sie einen Wechsel unter der vorgenannten Bedingung nur dann veranlasst, wenn noch weitere Wechsel-Bedingungen erfüllt sind. Solche weiteren Wechsel-Bedingungen können beispielsweise sein, dass der bevorzugte Zugangs-Netzknoten über einen längeren Zeitraum dem aktuell zugeordneten Zugangs-Netzknoten überlegen ist. Eine entsprechende Zeitkonstante kann dabei so eingerichtet sein, dass danach davon ausgegangen werden kann, dass der bevorzugte Zugangs-Netzknoten nicht nur kurzfristig vorteilhaft sondern längerfristig vorteilhaft sein wird, so dass ein entsprechender Wechsel zu diesem Zugangs-Netzknoten als zugeordneten Zugangs-Netzknoten sinnvoll ist. Weitere Wechsel-Bedingungen können beispielsweise auch entsprechende Protokolle, Protokoll-Standards und/oder auch entsprechende Sicherheits-Eigenschaften des bevorzugten Zugangs-Netzknotens sein.

Das Veranlassen eines solchen Wechsels des Zugangs-Netzknotens kann beispielsweise das Senden einer Information über den bevorzugten Zugangs-Netzknoten an den aktuell zugeordneten Zugangs-Netzknoten oder auch den bevorzugten Zugangs-Netzknoten umfassen. Weiterhin kann das Veranlassen des Wechsels der Zugangs-Netzknoten auch das Senden einer Nachricht an den aktuell zugeordneten Zugangs-Netzknoten und/oder den bevorzugten Zugangs-Netzknoten sein, dass ein solcher Wechsel des zugeordneten Zugangs-Netzknotens (häufig als "Handover" bezeichnet) veranlasst wird.

Außer den vorgenannten Bedingungen für einen solchen Wechsel von zugeordneten Zugangs-Netzknoten für eine Funkstation können im Drahtlos-Netzwerk, dem Zugangs-Netzknoten und/oder der Funkstation auch noch weitere Kriterien hinterlegt sein, unter welchen ebenfalls ein solcher Wechsel, ggf. auch unabhängig von den vorstehend genannten Kriterien, vorgenommen werden kann, soll oder wird.

Die vorstehend genannte Aufgabe wird ebenfalls gelöst von einem Drahtlos-Netzwerk gemäß der vorliegenden Beschreibung mit mindestens zwei Zugangs-Netzknoten gemäß der vorliegenden Beschreibung sowie mindestens einer Funkstation gemäß der vorliegenden Beschreibung.

Weiterhin können die mindestens zwei Zugangs-Netzknoten über eine drahtlose oder drahtgebundene Schnittstelle zur Kommunikation zwischen den mindestens zwei Zugangs-Netzknoten verbunden sein. Eine solche drahtgebundene Schnittstelle kann beispielsweise eine Ethernet-Schnittstelle oder eine vergleichbare Schnittstelle sein. Weiterhin können solche Schnittstellen auch alle gängigen parallelen oder seriellen Schnittstellen zur Übertragung zwischen Geräten und/oder Kommunikationseinrichtungen sein. So können beispielsweise die in der vorliegenden Beschreibung genannten Daten bezüglich einer Funkstation, die von einem Zugangs-Netzknoten zu einem weiteren Zugangs-Netzknoten wechselt, über diese oder eine solche Schnittstelle zwischen dem Zugangs-Netzknoten und dem weiteren Zugangs-Netzknoten übertragen werden.

Die vorstehend genannte Aufgabe wird auch gelöst durch ein Verfahren zur Zuordnung einer Funkstation gemäß der vorliegenden Beschreibung zu einem Zugangs-Netzknoten gemäß der vorliegenden Beschreibung in einem Drahtlos-Netzwerk gemäß der vorliegenden Beschreibung, wobei die Funkstation einem ersten Zugangs-Netzknoten zugeordnet ist und im Drahtlos-Netzwerk ein zweiter Zugangs-Netzknoten vorliegt, wobei weiterhin
a) die Funkstation über den Kontroll-Kommunikationskanal gesendete Informations-Nachrichten des ersten und/oder des zweiten Zugangs-Netzknotens empfängt und auswertet, und
b) die Funkstation zumindest unter Anderem unter Verwendung des Ergebnisses der Auswertung der Informations-Nachrichten einen bevorzugten Zugangs-Netzknoten ermittelt.

Die Auswertung der Informations-Nachrichten und daraus folgende Ermittlung eines bevorzugten Zugangs-Netzknotens kann beispielsweise wie in der vorliegenden Beschreibung an anderer Stelle schon näher erläutert erfolgen.

Weiterhin kann vorgesehen sein, dass nach dem Verfahrensschritt b):
c1) die Funkstation eine Informations-Nachricht über den bevorzugten Zugangs-Netzknoten an den ersten und/oder den zweiten Zugangs-Netzknoten sendet, wenn der zweite Zugangs-Netzknoten als der bevorzugte Zugangs-Netzknoten ermittelt wurde.

Weiterhin kann alternativ oder zusätzlich zum Schritt c1) nach dem Verfahrensschritt b):
c2) die Funkstation eine Nachricht zum Einleiten eines Wechsels zum zweiten Zugangs-Netzknoten als zugeordneten Netzknoten an den ersten und/oder zweiten Zugangs-Netzknoten senden.

Dabei können die unter c1) und c2) genannten Verfahrensschritte gemäß den an anderer Stelle dieser Beschreibung bereits erläuterten Ausgestaltungsmöglichkeiten ausgebildet sein.

Innerhalb des genannten Verfahrens kann weiterhin vorgesehen sein, dass zum Wechsel der Funkstation vom ersten zum zweiten Zugangs-Netzknoten als dem der Funkstation zugeordneten Zugangs-Netzknoten, Daten bezüglich der Funkstation vom ersten an den zweiten Zugangs-Netzknoten übermittelt werden, beispielsweise über die vorstehend genannte Schnittstelle (z.B. eine Ethernet-Schnittstelle) zwischen den zwei Zugangs-Netzknoten. Die Daten bezüglich der Funkstation können beispielsweise wie an anderer Stelle dieser Beschreibung bereits näher ausgeführt ausgebildet sein. Die Übermittlung kann dabei auf Anforderung des zweiten Zugangs-Netzknotens oder auch auf Initiative des ersten Zugangs-Netzknotens erfolgen.

Die Übermittlung der Daten bezüglich der Funkstation kann beispielsweise vor Aufnahme des konkreten Datenverkehrs, insbesondere eines Nutzdatenverkehrs, zwischen dem neu zugeordneten zweiten Zugangs-Netzknoten und der Funkstation erfolgen. Die Übermittlung der Daten bezüglich der Funkstation kann beispielsweise vor der konkreten Zuordnung der Funkstation zum zweiten Zugangs-Netzknoten, während des Zuordnungsvorgangs oder auch kurz danach, aber vor der Aufnahme der konkreten Datenübertragung bzw. Nutzdaten-Übertragung erfolgen.

Die vorliegende Erfindung beschreibt ein Drahtlosnetzwerk sowie Zugangs-Netzknoten und Funkstationen für ein solches Netzwerk, welches eine erleichterte und verbesserte Zuordnung der Funkstationen im Drahtlos-Netzwerk zu entsprechenden Zugangs-Netzknoten erlaubt. Dabei ist ein den Zugangs-Netzknoten gemeinsamer Kontroll-Kommunikationskanal vorgesehen, über welchen die Zugangs-Netzknoten Informationsnachrichten versenden. Dabei unterscheidet sich dieser Kontroll-Kommunikationskanal von den ansonsten von den Zugangs-Netzknoten verwendeten Datenkanälen zur Datenkommunikation bzw. Nutzdatenkommunikation mit den Funkstationen. Auf diese Weise ist es beispielsweise möglich, für die Ermittlung eines bevorzugten Zugangs-Netzknotens notwendige Informationen über den gemeinsamen Kontroll-Kommunikationskanal zu versenden, ohne dabei die Datenkommunikation der Zugangs-Netzknoten mit ihren zugeordneten Funkstationen zu stören. Weiterhin müssen die Funkstationen beispielsweise zum Ermitteln eines bevorzugten Zugangs-Netzknotens nur noch einen Kanal für alle Zugangs-Netzknoten abhören und müssen nicht für eine solche Untersuchung beziehungsweise Suche relativ zeit- und ressourcenaufwändig zwischen verschiedenen Funkkanälen hin- und herschalten.

Es sind daher beispielsweise Vorteile der vorliegenden Erfindung, dass die Datenkanäle der Zugangs-Netzknoten nicht mehr mit beispielsweise Lebenszeichen-Telegrammen belastet werden. Dadurch können bei einer relativ geringen Anzahl von Funkstationen auch großflächige Bereiche mit wenigen Datenkanälen ausgeleuchtet werden. Weiterhin kann ein Vorteil sein, dass die Funkstationen periodisch einen Background-Scan machen können. Über einen solchen kann eine Funkstation proaktiv und in relativ kurzer Zeit feststellen, ob es in seiner Nähe eventuell einen besseren Zugangs-Netzknoten gibt, mit dem er sich verbinden kann. Weiterhin kann vorteilhaft sein, dass die Anzahl der benutzten Datenkanäle nicht mehr die vorstehend genannte Zeit für einen Background-Scan der verfügbaren Zugangs-Netzknoten beeinflussen können und daher jetzt unter Verwendung der vorliegenden Erfindung gegebenenfalls auch größere Drahtlos-Netzwerke betrieben werden können. Durch die Trennung der Datenkanäle von dem Kontroll-Kommunikationskanal ist das Drahtlos-Netzwerk zudem nicht mehr so anfällig gegenüber externen Störern, und es können jetzt auch Kanäle benutzt werden, auf welchen eine Radarerkennung stattfindet. Dabei kann beispielsweise vorgesehen sein, dass der Kontroll-Kommunikationskanal kein Kanal ist, auf dem eine Radarstörung vorliegen könnte.

Nachfolgend wird die Erfindung beispielhaft mit Bezug auf die beigefügten Figuren näher erläutert. Es zeigen:
- Figur 1:: Beispiel für ein WLAN-Netz;
- Figur 2:: Beispielhafter Zeitablauf für Datenübertragung und Hintergrund-Suche in einer Funkstation.

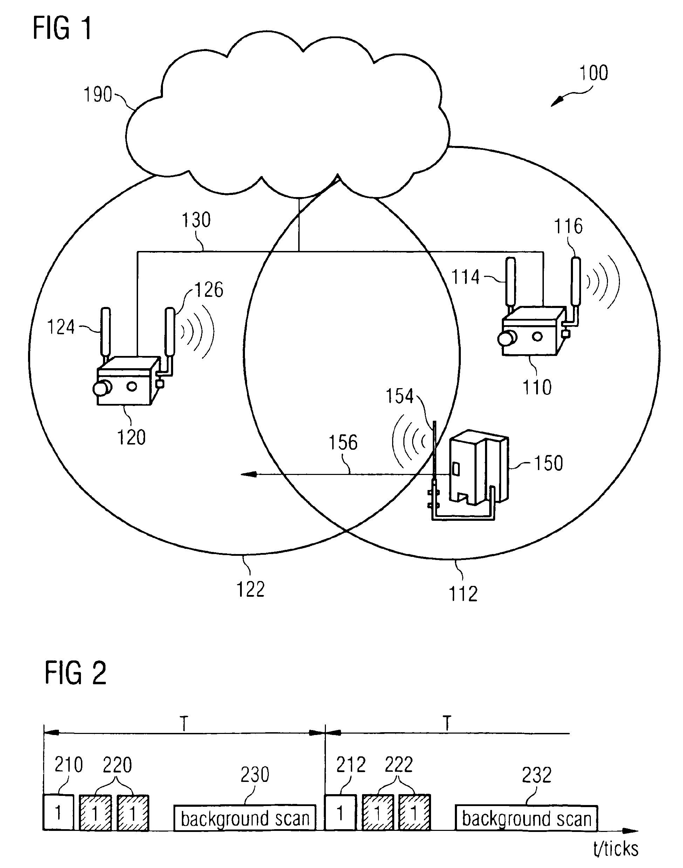

Figur 1 zeigt ein WLAN-Netz gemäß dem Standard IEEE 802.11 100 mit einem ersten "WLAN-Access-Point" 110 und einem zweiten "WLAN-Access-Point" 120 sowie einem "WLAN-Client" 150. Dabei sind die Access-Points Beispiele für einen Zugangs-Netzknoten gemäß der vorliegenden Beschreibung, während der WLAN-Client ein Beispiel für eine Funkstation gemäß der vorliegenden Beschreibung ist. Jeder der Access-Points 110, 120 weist zwei Antennen 114, 116, 124, 126 auf, wobei die Antennen 114, 116 des ersten Access-Points 110 ein Funkfeld ausleuchten, welches in Figur 1 mit einem Kreis 112 bezeichnet ist und die Antennen 124, 126 des zweiten Access-Points 120 ein Funkfeld ausleuchten, welches in Figur 1 durch einen Kreis 122 symbolisiert ist.

Der Client 150 umfasst eine Antenne 154, die relativ zentral im Funkfeld 112 des ersten Access-Points 110 und am Rande des Funkfelds 122 des zweiten Access-Points 120 liegt.

Die Access-Points 110, 120 sind über eine Ethernet-Verbindung 130 miteinander sowie einem Hintergrund-Netzwerk 190 verbunden. Das Hintergrundnetzwerk 190 kann beispielsweise weitere Access-Points, Steuerungseinrichtungen oder auch einen Übergang zu anderen Netzen, beispielsweise zum Internet, oder Ähnliches umfassen.

Jeder der Access-Points 110, 120 weist zwei Sende- und Empfangseinheiten auf, wo jeweils über eine erste Sende- und Empfangseinheit, der jeweils eine der Antennen 114, 124 der Access-Points 110, 120 zugeordnet ist, zur Datenkommunikation mit dem Client 150 oder weiteren Funkstationen verwendet wird. Über eine zweite Sende- und Empfangseinheit, der die jeweils andere Antenne 116, 126 der Access-Points 110, 120 zugeordnet sind, wird in kurzen Zeitabständen, beispielsweise alle 5 ms, ein Lebenszeichentelegramm auf einem sich von den Datenkanälen, die den Access-Points 110, 120 zur Verfügung stehen, unterscheidenden Management-Kanal, versendet. Die Datenkanäle sowie der Management-Kanal unterscheiden sich jeweils durch die zentralen Sendefrequenzen. Die Informationsnachricht kann beispielsweise als ein Beacon-Frame gemäß dem WLAN-Standard IEEE 802.11 ausgebildet sein.

Die Datenkommunikation des ersten Access-Points 110 erfolgt über einen ersten Datenkanal, während die Datenkommunikation des zweiten Access-Point 120 über einen zweiten, sich vom ersten Datenkanal unterscheidenden Datenkanal, erfolgt. Auf dem Management-Kanal senden beide Access-Points 110, 120 die vorstehend genannten Lebendsignale im Abstand von beispielsweise 5 ms. Dabei entsprechen die genannten Datenkanäle Beispielen für ausgewählte Datenkanäle gemäß der vorliegenden Beschreibung, während der hier beschriebene Managementkanal ein Beispiel für einen Kontroll-Kommunikationskanal gemäß der vorliegenden Beschreibung ist.

Zur Ermittlung eines bevorzugten Access-Points 110, 120 liest der Client 150 in regelmäßigen Zeitabständen den Management-Kanal und bestimmt die Eingangsfeldstärke bzw. Eingangsintensität der von den Access-Points 110, 120 kommenden Lebendsignalen. Im vorliegenden Beispiel, in welchem der Client relativ zentral im Funkfeld 112 des ersten Access-Points 110 liegt und am äußersten Rande des Funkfelds 122 des zweiten Access-Points 120, ist die Intensität des Lebendsignals vom ersten Access-Point 110 deutlich größer als die Intensität des Lebendsignals vom zweiten Access-Points 120. Solange dies der Fall ist, wählt bzw. behält der Client 150 den ersten Access-Point 110 als seinen assoziierten Access-Point und wickelt die Kommunikation, beispielsweise mit einem im Hintergrundnetz 190 befindlichen Kommunikationspartner, über den ersten Access-Point 110 ab.

Nach einer Verschiebung des Clients 150 gemäß dem Pfeil 156 in Figur 1 würden allerdings nach Erreichen des Endes des Pfeils die Intensität der Lebendsignale vom ersten Access-Point 110 erheblich abnehmen, wogegen die Intensität der Lebendsignale vom zweiten Access-Point 120 zunehmen und auch diejenige der Lebendsignale vom ersten Access-Point 110 übersteigen würde.

Sobald der Client 150 feststellt, dass der zweite Access-Point 120 die stärkeren Signale liefert, sendet er eine Anforderungsnachricht an den zweiten Access-Point 120, dass er den Übergang zu ihm als neuen, assoziierten Access-Point beantragt. Daraufhin findet ein Übergang vom ersten Access-Point 110 zum zweiten Access-Point 120 als für den Client 150 zuständigen Access-Point gemäß der in den WLAN-Standards üblichen Procederes statt. Dabei wird auch beispielsweise der im für die Kommunikation mit dem Client 150 ersten Access-Point 110 gespeicherte "Kontext" über die Ethernet-Schnittstelle 130 an den zweiten Access-Point 120 übertragen. Übertragen werden dabei auch diejenigen Daten, die im ersten Access-Point 110 noch gespeichert und für eine Übertragung an den Client 150 vorgesehen waren, sowie ggf. auch diejenigen Nachrichten, die bereits an den Client 150 versendet wurden, aber von diesem noch nicht quittiert sind.

Im WLAN-Netz 100 bzw. dem Client 150 und/oder den Access-Points 110, 120 können neben dem vorstehend genannten Handover-Verfahren anhand der Analyse von Lebenszeichentelegrammen der Access-Points 110, 120 weitere Gründe bzw. Verfahren zum Handover vorgesehen sein. So kann ein Client beispielsweise einen Handover zu einem anderen Access-Point auslösen, wenn er Daten oder Datentelegramme nicht mehr erfolgreich an den ihm zugeordneten Access-Point senden kann.

Im vorliegenden WLAN-Netz 130 ist ein Echtzeitprotokoll vorgesehen, nach welchem jeder Access-Point 110, 120 allen ihm zugeordneten Clients 150 in regelmäßigen Zeitabständen auf dem ausgewählten Datenkanal Abfrage-Nachrichten (so genannte "Polls") sendet, welche den zugeordneten Clients 150 die Möglichkeit des darauffolgenden Zurücksendens von Daten bzw. Informationen ermöglicht. Der Abstand dieser Polls ist dabei von den Parametern des Echtheitsystems abhängig und kann beispielsweise 32, 64 oder auch 128 Millisekunden betragen.

Figur 2 zeigt einen beispielhaften Zeitablauf innerhalb eines Clients 150 in einem solchen WLAN-Netz. Dargestellt ist horizontal eine Zeitscala, auf welcher verschiedene eingehende Signale bzw. Tätigkeiten des Clients 150 dargestellt sind. Die Darstellung beginnt mit dem Beginn eines Zykluses, welcher mit einer Abfragenachricht 210 vom zugeordneten Access-Point 110 beginnt. Aufgrund dieser Abfragenachricht kann der Client 150 dann Daten an den Access-Point 110 über den ausgewählten Datenkanal schicken.

Weiterhin sind zwei optionale weitere Polls 220 vorgesehen, bei welchen ein Access-Point ggf. weitere Daten vom Client abrufen kann, wenn solche vorliegen oder der Client dies beantragt. Nachfolgend diesen Polls kann der Client dann wiederum Daten an den Access-Point schicken.

Weiterhin ist eine Zeitspanne 230 vorgesehen, in welcher der Client den Management-Kanal im Netzwerk 100 abhört, um zu ermitteln, ob es bessere Access-Points für ihn gibt als derjenige, dem er aktuell zugeordnet ist. In den Antwortnachrichten auf den Polls 210 bzw.220 wird dem Access-Point die Lage und Dauer des Hintergrund-Scan-Fensters 230 mitgeteilt und der Access-Point sendet in dieser Zeit keine weiteren Abfragenachrichten an den Client. Nach einer einstellbaren oder vorgegebenen Zeitperiode T beginnt dann dieser Abfragezyklus von Neuem mit einer erneuten Abfragenachricht 212, erneuten zusätzlichen Abfragemöglichkeiten 222 sowie wiederum einer Zeitspanne zum Abfragen des Managementkanals 232. Die Zeitspanne T entspricht der im Echtzeitprotokoll angegebenen Zykluszeit und kann beispielsweise 32, 64 oder 128 Millisekunden betragen.

Es kann ein weiterer Anlass für einen Wechsel des assoziierten Access-Points sein, wenn ein Client keine Abfragenachricht bzw. keinen Poll im innerhalb der zweifachen oder zweieinhalbfachen Zykluszeit erhält oder wenn er nach Anmelden an einem Access-Point überhaupt keinen Poll innerhalb einer Zykluszeit erhält.

Das vorliegend dargestellte System verbessert die Handover-Eigenschaften für einen Client, da die Scan-Zeit, die der WLAN-Client benötigt, um einen Access-Point mit der besten Feldstärke zu finden, relativ kurz ist, da nur ein Kanal für alle Access-Points abgehört werden muss. Dadurch, dass die Access-Points 110, 120 im vorliegenden WLAN-Netz 100 zwei voneinander getrennte Sende-Empfangseinheiten für den Datenkanal und den Management-Kanal besitzen, kann auch wirklich gleichzeitig auf beiden Kanälen gesendet werden.

Weiterhin haben die beiden Antennen 114, 116, 124, 126 der Access-Points 110, 120 jeweils die gleiche Antennencharakteristik, so dass die Feldstärkeverteilung von Informationen über den Managementkanal derjenigen der der Kommunikation über den Datenkanal entspricht und somit ein Handover auf Grund der Lebenszeichen-Signale über den Managementkanal auch für den Datenkanal passend ist.

Wenn der WLAN-Client 150 den in Figur dargestellten Hintergrund-Scan durchführt, wechselt er nur noch auf den einen Managementkanal und empfängt dort von allen WLAN-Access-Points in Reichweite deren Lebenszeichen. Hierfür werden beispielsweise die im Standard IEEE 802.11 beschriebenen Beacon-Frames benützt.

Zusätzlich enthalten diese Lebenszeichen-Signale ein spezielles Infoelement, das den sendenden WLAN-Access-Point als Access-Point mit einem gesonderten Managementkanal kennzeichnet und dem Client gleichzeitig die Frequenz und/oder die Adresse des Datenkanals dieses Access-Points mitteilt. Zudem kann ein Client auf diese Weise auch erfahren, ob auf den Datenkanal des entsprechenden Access-Points ein Radarsignal empfangen worden ist und damit möglicherweise ein anderer Access-Point besser als Kommunikationspartner geeignet ist.

Durch die vorstehend beschriebene Verkürzung der Scan-Zeit sowie die Trennung von Daten und Managementkanal lässt sich erreichen, dass die Datenkanäle der WLAN-Access-Points nicht unnötig mit Lebenszeichen-Telegrammen belastet werden und der Client in sehr kurzer, vorbestimmter Zeit feststellen kann, ob es in seine r Nähe eventuell bessere WLAN-Access-Points gibt, mit denen er sich verbinden kann. Weiterhin kann dann die Anzahl der Datenkanäle nicht mehr den Hintergrund-Scan der Clients beeinflussen, was auch das Betreiben größerer Installationen erleichtert oder ermöglicht. Zudem ist das System dann nicht mehr so anfällig gegen externe Störer, und es können auch Kanäle für die Datenübertragung verwendet werden, auf welchen eine Radarerkennung stattfindet (wobei der Managementkanal ein radarfreier Kanal sein sollte oder muss).

## Patentansprüche

1. Drahtlosnetzwerk (100) für Automatisierungs-, Echtzeit- und/oder Industrie-Anwendungen mit mindesten zwei Zugangs-Netzkncten (110, 120) und mindestens einer Funkstation (15C) zur Drahtlos-Kommunikation mit mindestens einem der mindestens zwei Zugangs-Netzknoten (110, 120),
wobei jeder der mindestens zwei Zugangs-Netzknoten (110, 120) einen aus einer Menge verfügbarer auswählbarer Datenkanäle ausgewählten Datenkanal zur Drahtlos-Kommunikation mit einer ihm jeweils zugeordneten Funkstation (150) verwendet,
und wobei ein sich von den auswählbaren Datenkanälen unterscheidender Kontroll-Kommunikationskanal vorgesehen ist, wobei jeder der mindestens zwei Zugangs-Netzknoten (110, 120) zum Drahtlos-Senden von Informationsnachrichten über den Kontroll-Kommunikationskanal ausgebildet ist und die mindestens eine Funkstation (150) zum Empfangen des Kontroll-Kommunikationskanals ausgebildet ist.
**dadurch gekennzeichnet,**
**dass** die Informationsnachrichten als Lebenszeichen-Telegramme des jeweiligen Zugangs-Netzknotens (110, 120) ausgebildet sind,
**dass** die Zugangs-Netzknoten (110, 120) jeweils eine Kommunikations-Steuerungseinheit aufweisen, die zum Versenden von Kommunikations-Abfrage-Nachrichten (210, 212, 220, 222) an eine Auswahl von dem Zugangs-Netzknoten zugeordneten Funkstationen (150) im Drahtlosnetzwerk (100) derart ausgebildet ist, dass in einem vorgegebenen oder vorgebbaren Zeitraum jede Funkstation (150) der Auswahl von Funkstationen (150) mindestens eine Kommunikations-Abfrage-Nachricht erhält,
und **dass** die Zugangs-Netzknoten (110, 120) Informationsnachrichten auf einem gemeinsamen Kontroll-Kommunikationskanal senden wobei die Informationsnachrichten von allen Zugangs-Netzknoten (110, 120) alleine mittels Abhören des gemeinsamen Kontroll-Kommunikationskanals durch Funkstationen empfangbar und auswertbar sind,
und **dass** die Steuerungseinheit derart ausgebildet ist, dass während eines einer zugeordneten Funkstation (150) zugeordneten Blockierungs-Zeitraums (230, 232) zur Abfrage des Kontroll-Kommunikationskanals keine Kommunikaticns-Abfrage-Nachricht (210, 212, 220, 222) an diese Funkstation (150) gesendet wird, wobei der Blockierungszeitraum (230, 232) von der Funkstation (150) an den Zugangs-Netzknoten (110, 120) übermittelt wird.

2. Zugangs-Netzknoten (110, 120) mit allen Merkmalen eines Zugangs-Netzknotens eines Drahtlos-Netzwerkes (100) nach Anspruch 1 zur Funk-Kommunikation mit einer ihm zugeordneten Funkstationen (150) in dem Drahtlos-Netzwerk (100) über einen aus der Menge verfügbarer Datenkanäle ausgewählten Datenkanal und zum Senden von Informations-Nachrichten über den Kontroll-Kommunikationskanal.

3. Zugangs-Netzknoten nach Anspruch 2,
**dadurch gekennzeichnet,**
**dass** der Zugangs-Netzknoten (110, 120) eine erste Sende-Empfangs-Einheit zur Funk-Kommunikation über den ausgewählten Datenkanal und eine zweite Sende-Einheit zum Senden der Informations-Nachrichten über den Kontroll-Kommunikationskanal aufweist.

4. Zugangs-Netzknoten nach Anspruch 3,
**dadurch gekennzeichnet,**
**dass** der ersten Sende-Empfangs-Einheit eine erste Antenne (114, 124) zugeordnet ist und der zweiten Sendeeinheit eine zweite Antenne (116, 126) zugeordnet ist, wobei die erste (114, 124) und zweite (116, 126) Antenne eine gleiche oder ähnliche Antennencharakteristik aufweisen.

5. Zugangs-Netzknoten nach einem der Ansprüche 2 bis 4,
**dadurch gekennzeichnet,**
**dass** die über den Kontroll-Kommunikationskanal gesendeten Informations-Nachrichten eine Identitätsinformation über den Zugangs-Netzknoten (110, 120) umfassen.

6. Zugangs-Netzknoten nach einem der Ansprüche 2 bis 5,
**dadurch gekennzeichnet,**
**dass** die über den Kontroll-Kommunikationskanal gesendeten Informations-Nachrichten mit einer vorgegebenen oder vorgebbaren Sende-Intensität ausgesendet werden.

7. Zugangs-Netzknoten nach einem der Ansprüche 2 bis 6,
**dadurch gekennzeichnet,**
**dass** die Informations-Nachrichten gemäß einem vorgegebenen oder vorgebbaren Zeitmuster ausgesendet werden.

8. Zugangs-Netzknoten nach einem der Ansprüche 2 bis 9,
**dadurch gekennzeichnet,**
**dass** der Zugangs-Netzknoten (110) eine drahtlose oder drahtgebundene Schnittstelle (130) zu einem weiteren Zugangs-Netzknoten (120) im Drahtlosnetzwerk (100) aufweist, wobei der Zugangs-Netzknoten (110) und der weitere Zugangs-Netzknoten (120) derart ausgebildet sind, dass, bei einem Wechsel einer dem Zugangs-Netzknoten (110) zugeordneten Funkstation (150) zum weiteren Zugangs-Netzknoten (120) als ihrem neuen zugeordneten Zugangs-Netzknoten, Daten bezüglich der Funkstation (150) an den weiteren Zugangs-Netzknoten (120) über die drahtlose oder drahtgebundene Schnittstelle (130) übermittelt werden, und/oder umgekehrt.

9. Funkstation (150) mit allen Merkmalen einer Funkstation eines Drahtlosnetzwerkes (100) nach Anspruch 1 zur Kommunikation mit einem ihr zugeordneten Zugangs-Netzknoten (110, 120) gemäß einem der Ansprüche 2 bis 10,
**dadurch gekennzeichnet,**
**dass** die Funkstation (150) zur Daten-Kommunikation mit dem ihr zugeordneten Zugangs-Netzknoten (110, 120) über den ausgewählten Datenkanal und zum Empfang von Informationsnachrichten über den Kontroll-Kommunikationskanal ausgebildet ist.

10. Funkstation nach Anspruch 9,
**dadurch gekennzeichnet,**
**dass** die Funkstation (150) zum Senden einer Information über einen Blockierungs-Zeitraum (230, 232), insbesondere über den ausgewählten Datenkanal, an den ihr zugeordneten Zugangs-Netzknoten (110, 120) ausgebildet ist, wobei die Funkstation (150) während des Blockierungs-Zeitraums (230, 232) zumindest unter anderem eine Abfrage des Kontroll-Kommunikationskanals vornimmt oder vornehmen möchte.

11. Funkstation nach Anspruch 9 oder 10,
**dadurch gekennzeichnet,**
**dass** die Funkstation (150) zum Versenden einer Antwort-Daten-Nachricht über den ausgewählten Datenkanal an den ihr zugeordneten Zugangs-Netzknoten als Antwort auf eine vom zugeordneten Zugangs-Netzknoten erhaltene Kommunikations-Abfrage-Nachricht (210, 212, 220, 222) ausgebildet ist.

12. Funkstation nach Anspruch 10 oder 11,
**dadurch gekennzeichnet,**
**dass** die Antwort-Daten-Nachricht an den Zugangs-Netzknoten die Information den Blockierungs-Zeitraum (230, 232) umfasst.

13. Funkstation nach einem der Ansprüche 9 bis 12,
**dadurch gekennzeichnet,**
**dass** die Funkstation (150) zur Auswertung von über den Kontroll-Kommunikationskanal empfangenen Informations-Nachrichten derart ausgebildet ist, dass empfangene Informations-Nachrichten aussendenden Zugangs-Netzknoten (110, 120) zugeordnet werden oder zuordenbar sind.

14. Funkstation nach einem der Ansprüche 9 bis 13,
**dadurch gekennzeichnet,**
**dass** die Funkstation (150) Mittel zum Ermitteln eines bevorzugten Zugangs-Netzknotens (110, 120) unter Verwendung von empfangenen Informations-Nachrichten umfasst.

15. Funkstation nach Anspruch 14,
**dadurch gekennzeichnet,**
**dass** die Funkstation (150) derart ausgebildet und eingerichtet ist, dass sie einen Wechsel zum bevorzugten Zugangs-Netzknoten (110, 120) veranlasst, wenn der ermittelte bevorzugte Zugangs-Netzknoten (110, 120) nicht dem aktuell zugeordneten Zugangs-Netzknoten (110, 120) entspricht und weitere Wechsel-Bedingungen erfüllt sind.

## Claims

1. Wireless network (100) for automation, real-time and/or industrial applications, having at least two access network nodes (110, 120) and at least one radio station (150) for wireless communication with at least one of the at least two access network nodes (110, 120),
each of the at least two access network nodes (110, 120) using a data channel selected from a set of available selectable data channels for wireless communication with a radio station (150) respectively assigned to it,
and a control communication channel which differs from the selectable data channels being provided, each of the at least two access network nodes (110, 120) being designed to wirelessly transmit information messages via the control communication channel and the at least one radio station (150) being designed to receive the control communication channel,
**characterized**
**in that** the information messages are in the form of sign of life telegrams from the respective access network node (110, 120),
**in that** the access network nodes (110, 120) each have a communication control unit which is designed to transmit communication request messages (210, 212, 220, 222) to a selection of radio stations (150) assigned to the access network node in the wireless network (100) in such a manner that each radio station (150) of the selection of radio stations (150) receives at least one communication request message in a predefined or predefinable period, and in that the access network nodes (110, 120) transmit information messages on a common control communication channel, the information messages from all access network nodes (110, 120) being able to be received and evaluated by radio stations solely by listening in to the common control communication channel,
and **in that** the control unit is designed in such a manner that, during a blocking period (230, 232) assigned to an associated radio station (150), no communication request message (210, 212, 220, 222) for requesting the control communication channel is transmitted to this radio station (150), the blocking period (230, 232) being transmitted from the radio station (150) to the access network node (110, 120).

2. Access network node (110, 120) having all of the features of an access network node in a wireless network (100) according to Claim 1 for radio communication with a radio station (150) assigned to it in the wireless network (100) via a data channel selected from the set of available data channels and for transmitting information messages via the control communication channel.

3. Access network node according to Claim 2,
**characterized**
**in that** the access network node (110, 120) has a first transmitting/receiving unit for radio communication via the selected data channel and a second transmitting unit for transmitting the information messages via the control communication channel.

4. Access network node according to Claim 3,
**characterized**
**in that** a first antenna (114, 124) is assigned to the first transmitting/receiving unit and a second antenna (116, 126) is assigned to the second transmitting unit, the first antenna (114, 124) and the second antenna (116, 126) having the same or similar antenna characteristics.

5. Access network node according to one of Claims 2 to 4, **characterized**
**in that** the information messages transmitted via the control communication channel comprise an item of identity information relating to the access network node (110, 120).

6. Access network node according to one of Claims 2 to 5,
**characterized**
**in that** the information messages transmitted via the control communication channel are emitted with a predefined or predefinable transmission intensity.

7. Access network node according to one of Claims 2 to 6,
**characterized**
**in that** the information messages are emitted according to a predefined or predefinable time pattern.

8. Access network node according to one of Claims 2 to 9,
**characterized**
**in that** the access network node (110) has a wireless or wired interface (130) to a further access network node (120) in the wireless network (100), the access network node (110) and the further access network node (120) being designed in such a manner that, if a radio station (150) assigned to the access network node (110) changes to the further access network node (120) as its new assigned access network node, data relating to the radio station (150) are transmitted to the further access network node (120) via the wireless or wired interface (130) and/or vice versa.

9. Radio station (150) having all of the features of a radio station in a wireless network (100) according to Claim 1 for communication with an access network node (110, 120) according to one of Claims 2 to 10 which is assigned to it,
**characterized**
**in that** the radio station (150) is designed for data communication with the access network node (110, 120) assigned to it via the selected data channel and to receive information messages via the control communication channel.

10. Radio station according to Claim 9,
**characterized**
**in that** the radio station (150) is designed to transmit an item of information relating to a blocking period (230, 232), in particular via the selected data channel, to the access network node (110, 120) assigned to it, in which case the radio station (150) at least requests or would like to request the control communication channel, inter alia, during the blocking period (230, 232).

11. Radio station according to Claim 9 or 10,
**characterized**
**in that** the radio station (150) is designed to transmit a response data message via the selected data channel to the access network node assigned to it in response to a communication request message (210, 212, 220, 222) received from the assigned access network node.

12. Radio station according to Claim 10 or 11,
**characterized**
**in that** the response data message to the access network node comprises the information relating to the blocking period (230, 232).

13. Radio station according to one of Claims 9 to 12,
**characterized**
**in that** the radio station (150) is designed to evaluate information messages received via the control communication channel in such a manner that received information messages are or can be assigned to emitting access network nodes (110, 120).

14. Radio station according to one of Claims 9 to 13,
**characterized**
**in that** the radio station (150) comprises means for determining a preferred access network node (110, 120) using received information messages.

15. Radio station according to Claim 14,
**characterized**
**in that** the radio station (150) is designed and set up in such a manner that it causes a change to the preferred access network node (110, 120) if the determined preferred access network node (110, 120) does not correspond to the currently assigned access network node (110, 120) and further change conditions have been met.

## Revendications

1. Réseau sans fil pour des applications d'automatisation en temps réel et/ou de l'industrie, comprenant au moins deux noeuds ( 110, 120 ) de réseau d'accès et au moins une station ( 150 ) radio pour communiquer sans fil avec au moins l'un des au moins deux noeuds ( 110, 120 ) de réseau d'accès,
dans lequel chacun des au moins deux noeuds ( 110, 120 ) de réseau d'accès utilise, pour la communication sans fil avec une station ( 150 ) radio qui lui est associée, un canal de données sélectionné dans un ensemble de canaux de données disponibles et pouvant être sélectionnés,
et dans lequel il est prévu un canal de communication de commande, se distinguant des canaux de données pouvant être sélectionnés, chacun des au moins deux noeuds ( 110, 120 ) de réseau d'accès étant constitués pour l'émission sans fil de messages d'information par l'intermédiaire du canal de communication de commande et la au moins une station ( 150 ) radio étant constituée pour la réception du canal de communication de commande,
**caractérisé**
**en ce que** les messages d'information sont constitués sous la forme de télégrammes de signe de vie du noeud ( 110, 120 ) de réseau d'accès respectif,
**en ce que** les noeuds ( 110, 120 ) de réseau d'accès ont respectivement une unité de commande de communication, qui est constituée pour l'envoi de messages ( 210, 212, 220, 222 ) de demande de communication à une sélection de stations ( 150 ) radio associées au noeud de réseau d'accès du réseau sans fil de manière à ce que chaque station ( 150 ) radio de la sélection de stations ( 150 ) radio reçoive, dans un laps de temps prescrit ou pouvant l'être, au moins un message de demande de communication et en ce que les noeuds ( 110, 120 ) de réseau d'accès envoient des messages d'information sur un canal de communication de commande commun, les messages d'information de tous les noeuds ( 110, 120 ) de réseau d'accès pouvant être reçus et exploités seulement au moyen de l'écoute du canal de communication de commande commun,
et **en ce que** l'unité de commande est constituée de manière à ne pas envoyer, pendant un laps de temps ( 230, 232, ) de blocage associé à une station ( 150 ) radio associée pour demander le canal de communication de commande, de messages ( 210, 212, 220, 222 ) de demande de communication à cette station ( 150 ) radio, le laps de temps ( 230, 232 ) de blocage étant transmis par la station ( 150 ) radio aux noeuds ( 110, 120 ) de réseau d'accès.

2. Noeud ( 110, 120 ) de réseau d'accès ayant toutes les caractéristiques d'une structure de réseau d'accès d'un réseau ( 110 ) sans fil suivant la revendication 1, pour la communication radio avec une station ( 150 ) radio qui lui est associée dans le réseau sans fil par un canal de données sélectionné parmi l'ensemble de canaux de données disponibles et pour l'envoi de messages d'information par l'intermédiaire du canal de communication de commande.

3. Noeud de réseau d'accès suivant la revendication 2,
**caractérisé**
**en ce que** le noeud ( 110, 120 ) de réseau d'accès a une première unité d'émission-réception pour la communication radio par l'intermédiaire du canal de données sélectionné et une deuxième unité d'émission pour l'envoi des messages d'information par l'intermédiaire du canal de communication de commande.

4. Noeud de réseau d'accès suivant la revendication 3,
**caractérisé**
**en ce qu'**une première antenne ( 114, 124 ) est associée à la première unité d'émission-réception et une deuxième antenne ( 116, 126 ) est associée à la deuxième unité d'émission, la première ( 114, 124 ) et la deuxième ( 116, 126 ) antennes ayant une même caractéristique d'antenne ou une caractéristique d'antenne semblable.

5. Noeud de réseau d'accès suivant l'une des revendications 2 à 4,
**caractérisé**
**en ce que** les messages d'information envoyés par l'intermédiaire du canal de communication de commande comprennent une information d'identité sur le noeud ( 110, 120 ) de réseau d'accès.

6. Noeud de réseau d'accès suivant l'une des revendications 2 à 5,
**caractérisé**
**en ce que** les messages d'information envoyés par l'intermédiaire du canal de communication de commande sont envoyés à une intensité d'émission donnée à l'avance ou pouvant l'être.

7. Noeud de réseau d'accès suivant l'une des revendications 2 à 4,
**caractérisé**
**en ce que** les messages d'information sont envoyés suivant un modèle de temps donné à l'avance ou pouvant l'être.

8. Noeud de réseau d'accès suivant l'une des revendications 2 à 9,
**caractérisé**
**en ce que** le noeud ( 110 ) de réseau d'accès a une interface ( 130 ) sans fil ou par fil avec un autre noeud ( 120 ) de réseau d'accès dans le réseau sans fil, le noeud ( 110 ) de réseau d'accès et l'autre noeud ( 120 ) de réseau d'accès étant constitués de manière à ce que, s'il se produit un changement d'une station ( 150 ) radio, un passage de l'une des stations ( 150 ) radio associée au noeud de réseau d'accès à l'autre noeud ( 120 ) de réseau d'accès comme étant son nouveau noeud de réseau d'accès associé, des données concernant la station ( 150 ) radio sont transmises à l'autre noeud ( 120 ) de réseau d'accès par l'interface ( 130 ) sans fil ou par fil et/ou inversement.

9. Station ( 150 ) radio ayant toutes les caractéristiques d'une station radio d'un réseau ( 150 ) sans fil suivant la revendication 1 pour communiquer avec un noeud ( 110, 120 ) de réseau d'accès qui lui est associé suivant l'une des revendications 2 à 10,
**caractérisée**
**en ce que** la station ( 150 ) radio est constituée pour la communication de données avec le noeud ( 110, 120 ) de réseau d'accès qui lui est associé par le canal de données sélectionné et pour la réception de messages d'information par l'intermédiaire du canal de communication de commande.

10. Station suivant la revendication 9,
**caractérisée**
**en ce que** la station ( 150 ) radio est constituée pour l'envoi d'une information sur un laps de temps ( 230, 232 ) de blocage, notamment par l'intermédiaire du canal de données sélectionné, au noeud ( 110, 120 ) de réseau d'accès qui lui est associé, la station ( 150 ) radio effectuant ou pouvant effectuer pendant le laps de temps ( 230, 232 ) de blocage au moins entre autres une demande du canal de communication de commande.

11. Station suivant la revendication 9 ou 10,
**caractérisée**
**en ce que** la station ( 150 ) radio est constituée pour l'envoi d'un message de données de réponse, par l'intermédiaire du canal de données sélectionné, au noeud de réseau d'accès qui lui est associé comme réponse à un message ( 110, 112, 220, 222 ) de demande de communication obtenue par le noeud de réseau d'accès associé.

12. Station suivant la revendication 10 ou 11,
**caractérisée**
**en ce que** le message de données de réponse au noeud de réseau d'accès comprend comme information le laps de temps ( 230, 232 ) de blocage.

13. Station suivant l'une des revendications 9 à 12,
**caractérisée**
**en ce que** la station ( 150 ) radio est constituée pour exploiter des messages d'information reçus par l'intermédiaire du canal de communication de commande, de manière à ce que des messages d'information reçus soient associés à des noeuds ( 110, 120 ) de réseau d'accès émetteurs ou puissent l'être.

14. Station suivant l'une des revendications 9 à 13,
**caractérisée**
**en ce que** la station ( 150 ) radio comprend des moyens de détermination d'un noeud ( 110, 120 ) de réseau d'accès préféré, en utilisant des messages d'information reçus.

15. Station suivant la revendication 14,
**caractérisée**
**en ce que** la station ( 150 ) radio est constituée et conçue de manière à provoquer un passage au noeud ( 110, 120 ) de réseau d'accès préféré, si le noeud ( 110, 120 ) de réseau d'accès préféré déterminé ne correspond pas au noeud ( 110, 120 ) de réseau d'accès associé présentement et si d'autres conditions de passage sont satisfaites.
